# EUROPEAN PATENT APPLICATION

(11) **EP 2 963 650 A1**
(43) Date of publication of application: **06.01.2016**
(21) Application number: 15174569.2
(22) Date of filing: 30.06.2015
(51) Int. Cl.: G11B 27/031

(54) **RECORDING AND REPRODUCTION DEVICE, CONTENT PROCESSING METHOD, AND DISPLAY DEVICE**

(30) Priority: 01.07.2014 JP 2014136240
(71) Applicant: Funai Electric Co., Ltd., Daito city Osaka 574-0013 (JP)
(72) Inventor: TANAKA, Daichi, Osaka, Osaka 574-0013 (JP); KOIZUMI, Arihiro, Osaka, Osaka 574-0013 (JP); KINUGASA, Nobuyuki, Osaka, Osaka 574-0013 (JP); FUKUDA, Hiroya, Osaka, Osaka 574-0013 (JP)
(74) Representative: Osha Liang

(57) **Abstract**

A recording and reproduction device (1) includes a connector (50); a storage unit (40) that stores list information of a content stored in a first recording medium (60, 61, 62); and a controller (10) that associates the first recording medium (60, 61, 62) with an instruction to perform processing on the content based on the list information, and that stores the instruction in the storage unit (40), wherein the controller comprises a processor (11) that performs the processing based on the first recording medium (60, 61, 62) connected to the connector (50).

## Description

### [Technical Field]

The present invention relates to a recording and reproduction device, a content processing method, and a content processing program.

### [Background Art]

For example, a recording and reproduction device such as a hard disk recorder can be connected to a removable medium such as a removable hard disk compliant with the information versatile disk for removable usage (iVDR) standard. Editing with recorded content recorded in a removable medium is performed in a recording list displayed when a removable medium is connected to the recording and reproduction device.

The recording and reproduction device disclosed in Patent Document 1 can perform a moving or copying process of content between recording media by selectively displaying a content list of three recording media. When moving content with this recording and reproduction device, a message is displayed prompting the user to insert the recording medium, which has the content to be moved, recorded thereon. When the recording medium is inserted, the content selected as the content to be moved is read by the inserted recording medium and saved to a storage unit. When the saving of the content to the storage unit is complete, the content is deleted from the recording medium. Afterwards, the recording and reproduction device displays a message prompting the user to insert the recording medium where the content will be moved to. When the recording medium where the content will be moved to is inserted, the content recorded in the storage unit will be recorded in the inserted recording medium.

### [Prior Art Documents]

### [Patent Documents]

[Patent Document 1] Japanese Unexamined Patent Application Publication No. 2008-131215

Immediately after the user performs an edit operation for the content move, it is necessary to perform an operation to store the content to the recording and reproduction device by inserting the recording medium from which the content will be moved and to perform an operation to store the content by inserting the recording medium where the content will be moved to. Furthermore, if the recording medium where the content will be moved to is not inserted when the message prompting the user to insert the recording medium where the content will be moved to is displayed, the movement process stops and the recording and reproduction device cannot perform other processes. It is the same if the recording medium from which the content will be moved is not inserted when the message prompting the user to insert the recording medium from which the content will be moved is displayed. This is not limited to hard disk recorders, but also exists with various recording and reproduction devices.

One or more embodiments of the present invention provide a technique that can make managing content between storage media easier.

### [Summary of the Invention]

The recording and reproduction device according to one or more embodiments of the present invention includes:
a recording medium connection portion (or "connector") with a recording medium replaceably connected;
   a list information storage means that stores list information indicating a list of content recorded in the recording medium connected to the recording medium connection portion;
   a list display control means that displays on a display portion a content list for accepting editing between recording media according to the list information stored in the list information storage means with a recording medium connected to the recording medium connection portion;
   an editing means that accepts editing corresponding to the content list;
and a content processing means that performs a process on the content recorded in the recording medium according to the editing accepted, when the recording medium connects to the recording medium connection portion as a trigger.

Further, the content processing method according to one or more embodiments of the present invention:
stores list information indicating a list of content recorded in the recording medium connected to the recording medium connection portion that has a recording medium replaceably connected;
   displays a content list on a display portion for accepting editing between recording media according to the stored list information with a recording medium connected to the recording medium connection portion;
   accepts editing corresponding to the content list;
   and performs a process on the content recorded in the recording medium according to the editing accepted, when the recording medium connects to the recording medium connection portion as a trigger.

Furthermore, the content processing program according to one or more embodiments of the present invention has an aspect that realizes in a computer:
a list information storage function that stores list information indicating a list of content recorded in the recording medium connected to the recording medium connection portion that has a recording medium replaceably connected;
a list display control function that displays a content list on a display portion for accepting editing between recording media according to the stored list information with a recording medium connected to the recording medium connection portion;
an editing function that accepts editing corresponding to the content list;
and a content processing function that performs a process on the content recorded in the recording medium according to the editing accepted, when the recording medium connects to the recording medium connection portion as a trigger.

A recording and reproduction device according to one or more embodiments of the present invention comprises a connector; a storage unit that stores list information of a content stored in a first recording medium; and a controller that associates the first recording medium with an instruction to perform processing on the content based on the list information, and that stores the instruction in the storage unit, wherein the controller comprises a processor that performs the processing based on the first recording medium connected to the connector.

A content processing method according to one or more embodiments of the present invention comprises storing list information of a content stored in a first recording medium; associating the first recording medium with a command to perform processing on the content based on the list information; and performing the processing based on the command if the first recording medium is connected to a connector.

According to one or more embodiments, the command is to perform at least one of deletion, setting of protection, and removal of protection for the content recorded in the first recording medium.

According to one or more embodiments of the present invention, a display device arranges and displays a content list for each of a plurality of recording media, wherein a first content list of a first recording medium displays a first title, a second content list of a second recording medium displays a second title, and the display device accepts processing that includes at least one of moving and copying a content between the first recording medium and the second recording medium based on a change in an arrangement of the first title and the second title.

With one or more embodiments of the present invention, a recording and reproduction device can be provided that is capable of simplifying the management of content between storage media.

With one or more embodiments of the present invention, a recording and reproduction device can be provided that is capable of easily performing the reading of content between storage media.

With one or more embodiments of the present invention, convenience can be improved.

With one or more embodiments of the present invention, a recording and reproduction device can be provided that is capable of easily performing the movement of content between storage media.

With one or more embodiments of the present invention, convenience can be improved.

With one or more embodiments of the present invention, a recording and reproduction device can be provided that is capable of easily performing the editing of content including deletion, setting of protection, and removal of protection.

With one or more embodiments of the present invention, a recording and reproduction device can be provided that is capable of more easily performing the writing of content between storage media.

With one or more embodiments of the present invention, a content processing method can be provided that is capable of simplifying the management of content between storage media.

With one or more embodiments of the present invention, a content processing can be provided that is capable of realizing in a computer a function for simplifying the management of content between storage media.

Embodiments of the above-mentioned recording and reproduction device, display device and content processing method are defined in the dependent claims.

One or more embodiments of the content processing method may be implemented using instructions executed by one or more processors of the reproduction device and/or management server. Further, such instructions may correspond to computer readable instructions that are stored on one or more non-transitory computer readable media. The computer readable instructions stored on the non-transitory computer readable medium comprise instructions which, when executed by a processor, may perform one or more steps of any method and/or any embodiment disclosed herein.

In one or more embodiments of the present invention, an instruction may be a command or other information relating to performing processing on the content. For example, an instruction may be a command to copy content, a command to move content, a command to delete content, a command to set protection of content, a command to remove protection of content, and the like.

Unless otherwise stated, various aspects and features of one or more embodiments described herein may be practiced separately or combined together.

### [Brief Description of the Drawings]

FIG. 1 is a block diagram schematically illustrating a configuration example of a display system included in the recording and reproduction device.
FIG. 2 is a diagram schematically illustrating a configuration example of information held in a recording medium.
FIG. 3 is a diagram schematically illustrating a configuration example of list information of content.
FIG. 4 is a diagram schematically illustrating an example of a screen displaying a content list.
FIG. 5 is a diagram schematically illustrating a configuration example of a command list.
FIG. 6 is a flowchart showing an example of a content editing process.
FIG. 7 is a flowchart showing an example of an edit command execution process.
FIG. 8 is a flowchart showing an example of a connection initialization process.
FIG. 9 is a flowchart showing an example of a copy command execution process.
FIG. 10 is a flowchart showing an example of a move command execution process.
FIG. 11 is a flowchart showing an example of a delete command execution process.
FIG. 12 is a flowchart showing an example of a protection setting command execution process.
FIG. 13 is a flowchart showing an example of a protection deletion command execution process.
FIG. 14 is a flowchart showing an example of an edit command execution process in a second example.
FIG. 15 is a flowchart showing an example of an edit accepting process in a third example.

### [Detailed Description of Embodiments]

Embodiments of the present invention will be described below. Of course, the embodiments described below are only for exemplifying the present invention.

### (1) Summary of a recording and reproduction device, a content processing method, and a content processing program:

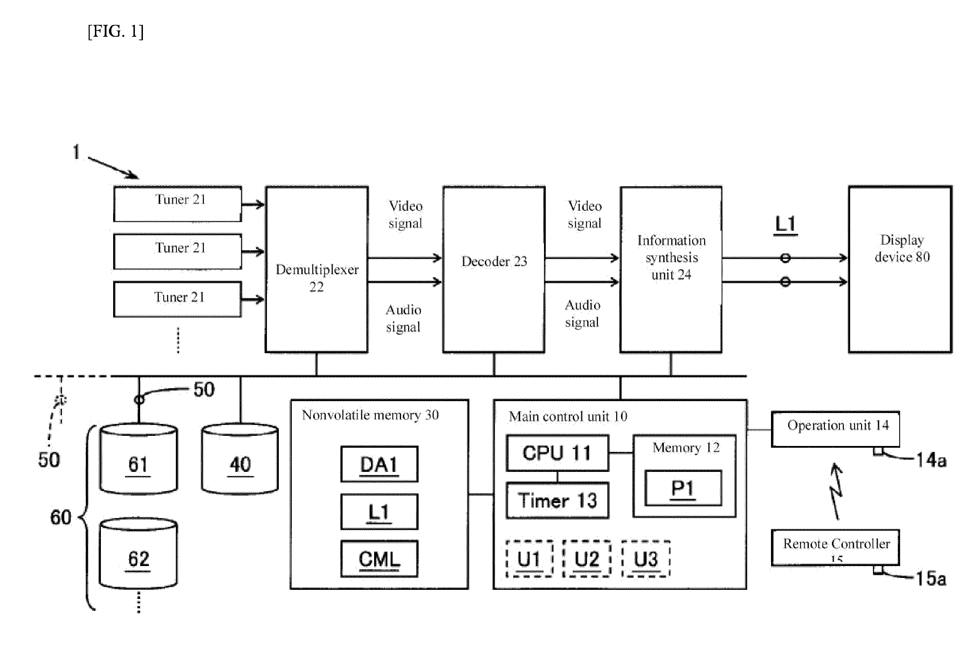

First, a summary of a recording and reproduction device, a content processing method, and a content processing program will be described with reference to FIGS. 1 to 15 as necessary.

### [Examples of the First Aspect] (Refer to FIGS. 1 to 15)

A recording and reproduction device 1 according to one or more embodiments comprises a recording medium connection portion (connector 50 in FIG. 1), a list information storage means (nonvolatile memory 30 in FIG. 1), a list display control means U1, an editing means U2, and a content processing means U3 as basic elements. The recording medium connection portion (50) is replaceably connected to a recording medium (removable medium 60 in FIG. 1). The list information storage means (30) stores list information DA1 indicating a list of content CT1 recorded in the recording medium (60) connected to the recording medium connection portion (50). In a recording medium (60) connected to the recording medium connection portion (50), the list display control means U1 displays on a display portion (for example, display device 80) a content list L1 for accepting editing between recording media (60) according to the list information DA1 stored in the list information storage means (30). The editing means U2 accepts editing corresponding to the content list L1. When the recording medium (60) connects to the recording medium connection portion (50) as a trigger, the content processing means U3 performs a process on the content CT1 recorded in the recording medium (60) in accordance with the accepted editing.

The process according to the editing of the content list L1 is performed when the recording medium (60) connects to the recording medium connection portion (50) as a trigger. Therefore, the user does not have to perform an operation to connect the recording medium (60) directly after making edits to the content list L1. Therefore, one or more embodiments of the present aspect can provide a technique that can make managing the content CT1 between the recording medium (60) easier.

Note that hard disks, flash memory, Blu-ray discs (BD), digital versatile discs (DVD), compact discs (CD) and the like are included as the recording medium. Devices integrated with other devices such as a display device are included as the recording and reproduction device. Of course, the recording and reproduction device may be for an automobile, and may not be for an automobile.

Copying content, moving content, deleting content, setting protection of content, removing protection of content, and the like are included in editing the content list. Note that protecting content refers to prohibiting changes such as deletion of the content.

### [Examples of the Second Aspect] (Refer to FIGS. 1 to 9, 14, and 15)

According to one or more embodiments, when the editing means U2 has accepted editing for writing the content CT1 recorded in a first recording medium (61) to a second recording medium (62), the content processing means U3 may read the content CT1 to be copied recorded in the first recording medium (61) to a storage unit (internal hard disk drive 40 in FIG. 1) when the first recording medium (61) connects to the recording medium connection portion (50) as a trigger, and may write the content CT1 to be written read from the storage unit (40) to the second recording medium (62) when the second recording medium (62) connects to the recording medium connection portion (50) as a trigger. With this aspect, a recording and reproduction device can be provided that is capable of more easily performing the writing of content between storage media.

Editing for copying content, editing for moving content, and the like are included as read editing.

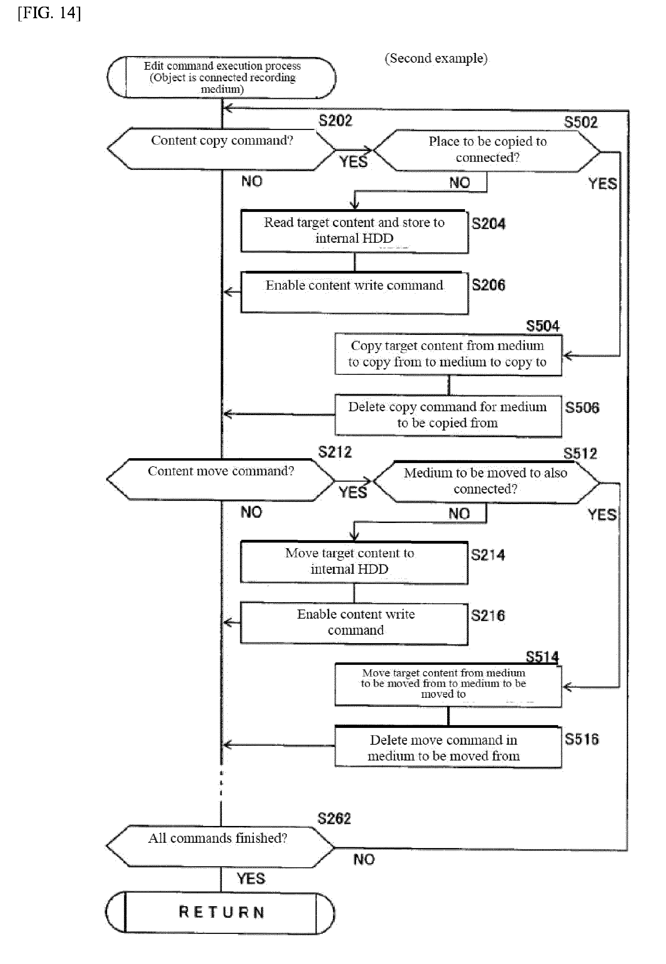

### [Examples of the Third Aspect] (Refer to FIG. 14)

According to one or more embodiments, when the first recording medium (61) and the second recording medium (62) are connected to the recording medium connection portion (50), the content processing means U3 may copy the content CT1 to be copied recorded in the first recording medium (61) directly to the second recording medium (62). This aspect can improve convenience because the content CT1 is directly copied when the first recording medium (61) and the second recording medium (62) are connected to the recording medium connection portion (50).

### [Examples of the Fourth Aspect] (Refer to FIGS. 1 to 8, 10, 14, and 15)

According to one or more embodiments, when the editing means U2 has accepted editing for moving the content CT1 recorded in a first recording medium (61) to a second recording medium (62), the content processing means U3 may move the content CT1 to be moved recorded in the first recording medium (61) to the storage unit (40) when the first recording medium (61) connects to the recording medium connection portion (50) as a trigger, and may write the content CT1 to be moved recorded in the storage unit (40) to the second recording medium (62) when the second recording medium (62) connects to the recording medium connection portion (50) as a trigger. With this aspect, a recording and reproduction device can be provided that is capable of easily moving the content CT1 between storage media (60).

### [Examples of the Fifth Aspect] (Refer to FIG. 14)

According to one or more embodiments, when the first recording medium (61) and the second recording medium (62) are connected to the recording medium connection portion (50), the content processing means U3 may move the content CT1 to be moved recorded in the first recording medium (61) directly to the second recording medium (62). This aspect can improve convenience because the content CT1 is directly moved when the first recording medium (61) and the second recording medium (62) are connected to the recording medium connection portion (50).

### [Examples of the Sixth Aspect] (Refer to FIGS. 1 to 8, 11 to 13)

According to one or more embodiments, when the editing means U2 has accepted editing including at least one of deleting, setting protection, and deleting protection for the content CT1 recorded in the recording medium (60), the content CT1 processing means U3 may perform a process on the content CT1 to be edited according to the editing accepted, when the recording medium (60) connects to the recording medium connection portion (50) as a trigger. With this aspect, a recording and reproduction device can be provided that is capable of easily performing the editing of the content CT1 including at least one of deletion, setting of protection, and removal of protection.

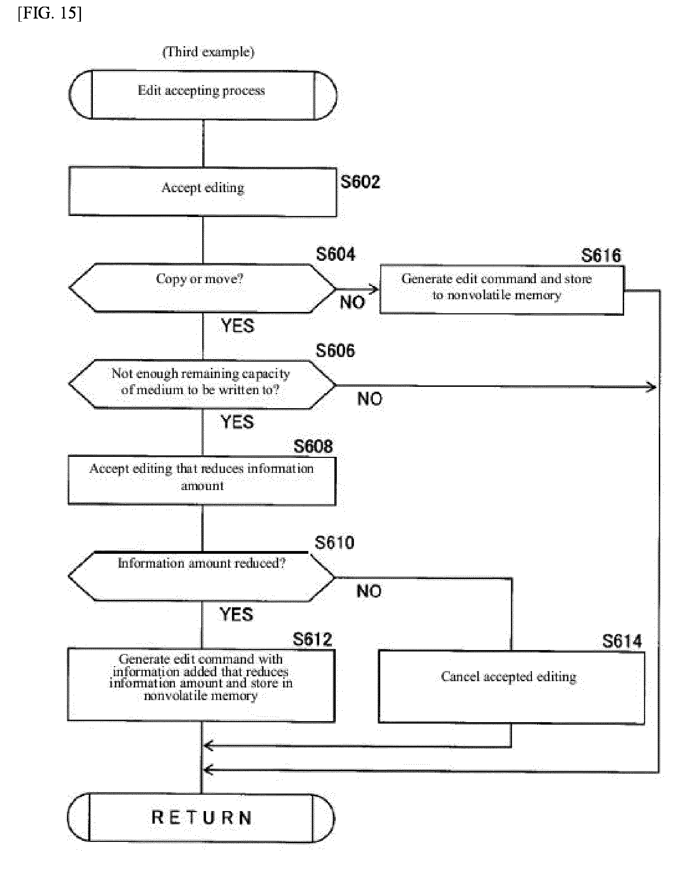

### [Examples of the Seventh Aspect] (Refer to FIG. 15)

According to one or more embodiments, the list information storage means (30) may store the remaining recording capacity of the recording medium (60) connected to the recording medium connection portion (50). When the editing means U2 has accepted editing for writing the content CT1 recorded in a first recording medium (61) to a second recording medium (62), the editing means U2 may accept editing for reducing the amount of information of the content CT1 to be written so that it is equal to or less than the remaining recording capacity of the second recording medium (62) when the remaining recording capacity of the second recording medium (62) is less than the capacity of the contents CT1 to be written recorded in the first recording medium (61). The content processing means U3 may write the content CT1 to be written to the second recording medium (62) after reducing the amount of information of the content CT1 to be written so that it is equal to or less than the remaining recording capacity of the second recording medium (62). One or more embodiments of the present aspect can provide a recording and reproduction device that is capable of more easily performing the writing of content between storage media because information can be written to the recording medium (60) even when the remaining capacity of the recording medium (60) to be written to is small by reducing the amount of information.

### [Examples of the Eighth Aspect] (Refer to FIGS. 1 to 15)

According to one or more embodiments, the aspect of a content processing method corresponding to the recording and reproduction device according to any one aspect of one through seven also has the effects described above.

### [Examples of the Ninth Aspect] (Refer to FIGS. 1 to 15)

According to one or more embodiments, the aspect of a content processing program corresponding to the recording and reproduction device according to any one aspect of one through seven also has the effects described above.

### (2) Description of configuration example of a recording and reproduction device:

First, a configuration example of a recording and reproduction device that is similar to various examples described later will be described.

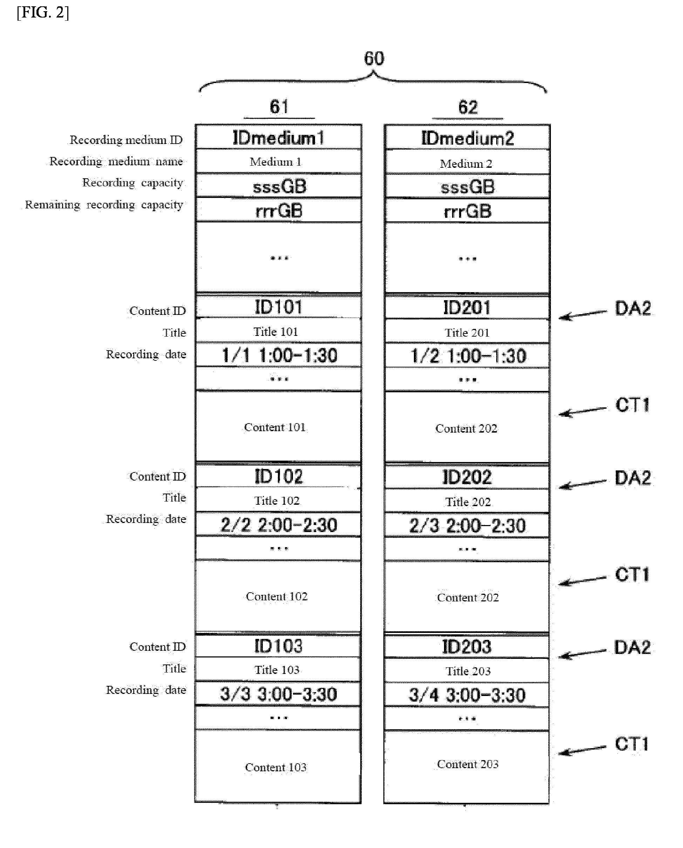

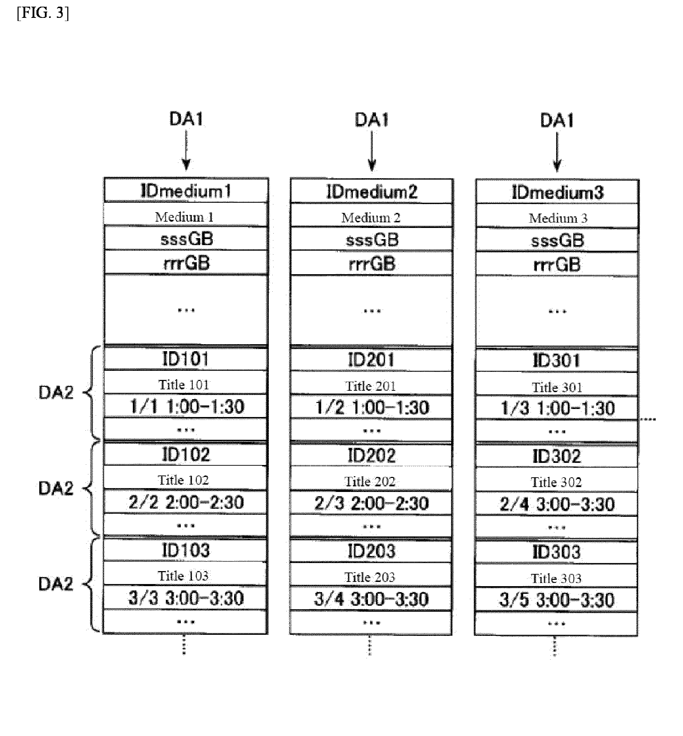

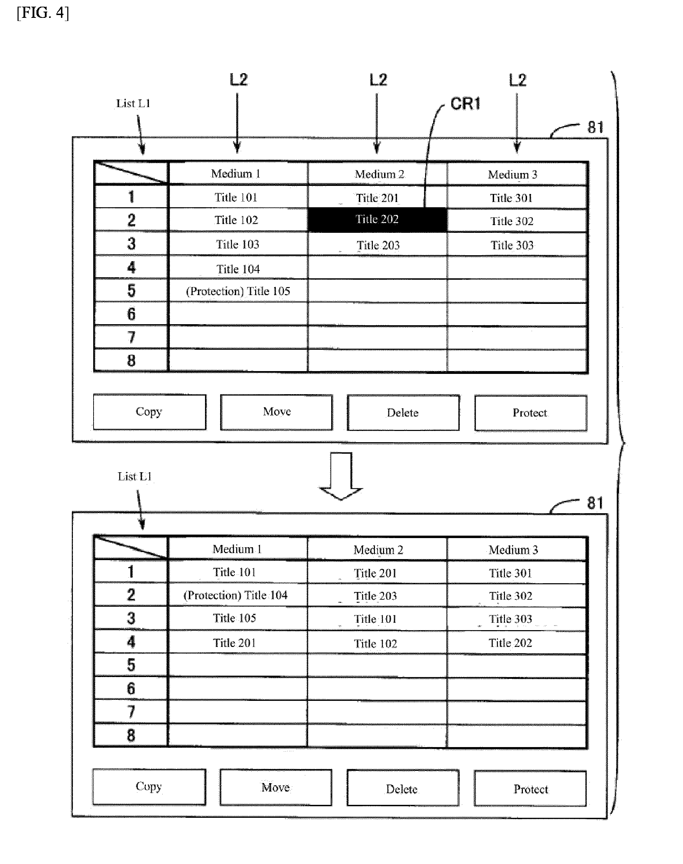

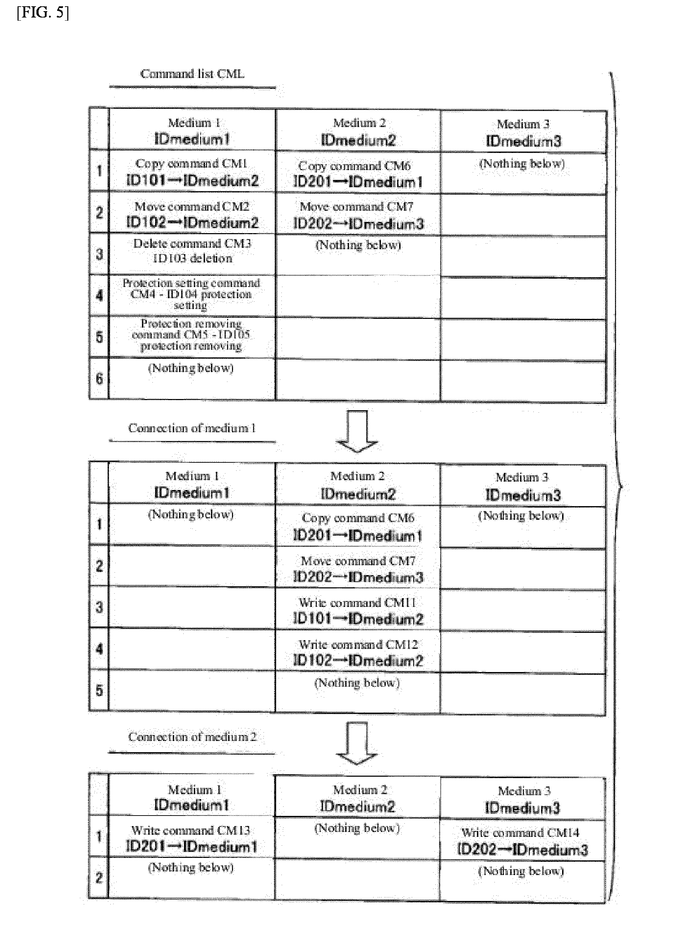

FIG. 1 schematically illustrates a configuration example of a display system included in the recording and reproduction device 1. FIG. 2 schematically illustrates an example of information held in the removable medium (recording medium) 60. FIG. 3 schematically illustrates a configuration example of the list information DA1 of the content CT1. FIG. 4 schematically illustrates an example of a screen 81 displaying the content list L1. FIG. 5 schematically illustrates a configuration example of a command list CML.

According to one or more embodiments, the recording and reproduction device 1 can be configured with, for example, components 10, 14, 15, 21 to 24, 30, 40 and 50 from among components 10, 14, 15, 21 to 24, 30, 40, 50, 60, 80 of the display system not including the removable medium 60 and the display device (display portion) 80. In this case, a remote controller 15 and a tuner 21 can be omitted. When the recording and reproduction device 1 is a television receiver (TV), the recording and reproduction device 1 can be configured with components 10, 14, 15, 21 to 24, 30, 40, 50, and 80 not including the removable medium 60 from among components of the display system. In this case, the remote controller 15 can be omitted.

The recording and reproduction device 1 comprises a plurality of digital tuners 21, a demultiplexer 22, a decoder 23, an information synthesis unit (or "information synthesizer") 24, an internal hard disk drive (HDD) 40, a connector (recording medium connection portion) 50, an operation unit (or "operator") 14, a main control unit (or "controller") 10, a nonvolatile memory (list information storage means) 30, and the like. The main control unit 10 comprises a central processing unit (CPU) 11 (or "processor"), a memory 12, a timer circuit 13, and the like. For example, a read only memory (ROM) and a random access memory (RAM) are included in the memory 12.

Each tuner 21 recovers by receiving a digital broadcast signal including a transport stream (TS). This recording and reproduction device can record television content received from a plurality of designated channels in parallel at the same time. For example, a plurality of ground digital tuners (tuners for ground digital broadcasting), a plurality of broadcasting satellite (BS) tuners (tuners for BS digital broadcasting), and a plurality of communication satellite (CS) tuners (tuners for CS digital broadcasting) are included in the plurality of tuners 21. Naturally, tuners other than these tuners (for example, analog tuners) may be included in the plurality of tuners 21.

The demultiplexer 22 separates video data and audio data from a digital broadcasting signal. As illustrated in FIG. 2, additional information DA2 added to the content CT1 including video data and audio data is included in the separated data. The demultiplexer 22 can extract electronic program guide (EPG) information and the like superimposed into a digital broadcast signal. The decoder 23 converts an image signal and an audio signal by decoding the image data and the audio data. The information synthesis unit 24 synthesizes an on screen display (OSD) signal from the main control unit 10 and the video signal, and synthesizes an audio synthesis signal from the main control unit 10 and the audio signal. The content list L1 illustrated in FIG. 4 is superimposed into the video signal as an OSD signal. The image signal from the information synthesis unit 24 is supplied to an external instrument (display device 80 in FIG. 1) such as a TV via a video output terminal. The image signal including the content list L1 enters the display device 80 or the like through the video output terminal from the information synthesis unit 24, and the content list L1 is displayed on the screen 81. The audio signal from the information synthesis unit 24 is supplied to an external instrument (display device 80 in FIG. 1) such as a TV via an audio output terminal. The demultiplexer 22, the decoder 23, and the information synthesis unit 24 can be configured by, for example, a system on a chip (SOC) or the like.

The internal HDD (storage unit) 40 has a hard disk that is a type of recording medium. With this recording and reproduction device, it is possible to connect, for example, the removable medium (recording medium) 60 to a universal serial bus (USB) interface standard connector (recording medium connection portion) 50. An external hard disk drive (HDD) according to the iVDR standard or the like, an external light disk drive and the like can be used in the removable medium 60. A recording medium (for example, removable media 61 and 62) is replaceably connected to the connector 50. The removable medium (first recording medium) 61 and the removable medium (second recording medium) 62 are referred to as the removable medium (recording medium) 60.

The operation unit 14 and the remote controller 15 have a plurality of keys 14a and 15a for performing various operations such as a main body on and off operation of the recording and reproduction device, a recording operation, a reproduction operation, and the like. The operation unit 14 comprises a light receiving means that receives a light signal indicating an operation command from the remote controller 15. Through this light receiving means, the light signal is converted to an electronic signal, and a command signal is output to the main control unit 10. The operation unit 14 is provided, for example, on the front surface of the main body of the recording and reproduction device.

The main control unit 10 controls each of the components based on the CPU 11 that performs processes for the entirety of the recording and reproduction device based on a program or information stored in the memory 12. The content processing program P1 according to one or more embodiments of the present technique is written to the memory 12. The main control unit 10 can be configured with a circuit comprised mainly of large scale integration (LSI). For example, the main control unit 10 performs a control that stores the content CT1 or the like from the demultiplexer 22 in the storage device, a control that plays the content CT1 or the like from the storage device, a control that accesses the nonvolatile memory 30, and the like. The main control unit 10 configures the list display control means U1, the editing means U2, and the content processing means U3. The content processing program P1 achieves in a computer a list display control function, an editing function, and a content processing function corresponding to these means U1 to U3, and also achieves in a computer a list information recording function by cooperating with the nonvolatile memory 30.

The plurality of contents CT1 and the additional information DA2 added to each of the contents CT1 are recorded in the recording medium 60 illustrated in FIG. 2. Identification information (content ID) of the content CT1, a title, a recording date, series information indicating a program series, a genre, an actor name, an input keyword and the like are included in the additional information DA2. Furthermore, identification information (recording medium ID), a recording medium name, a recording capacity, a remaining recording capacity, and the like are also held in each removable medium 60. Although not illustrated, the plurality of contents CT1 and the additional information DA2 added to each of the contents CT1 are also recorded in the internal HDD 40, and the recording medium ID, the recording medium name, the recording medium capacity, the remaining recording capacity, and the like are held in the internal HDD 40.

A semiconductor memory or the like such as a flash memory that can rewrite data can be used in the nonvolatile memory (list information storage means) 30. The nonvolatile memory 30 is connected to the main control unit 10, and houses the list information DA1, the content list L1, the command list CML, and the like.

As illustrated in FIG. 3, the additional information DA2, recording medium ID, recording medium name, recording capacity, remaining recording capacity, and the like held in each removable medium 60 are stored in the nonvolatile memory 30 as each list information DA1. Each list information DA1 indicates a list of content CT1 recorded in the removable medium 60. These list information DA1 are all held in the nonvolatile memory 30 even if there is a removable medium that is not connected to the connector 50. The content list L1 as that shown in FIG. 4 is created from these list information DA1 and displayed on the screen 81 of the display device 80. The content list L1 is a list for accepting editing between removable media 60. With the content list L1 illustrated in FIG. 4, the information (for example, title) of each content CT1 in each removable medium 60 is made into a content information column L2 arranged in the vertical direction on the display device 81, and these content information columns L2 are arranged in the horizontal direction.

Processing according to the editing cannot be performed even if edited between removable media 60 if the removable medium 60 to be edited is not connected to the connector 50. This recording and reproduction device 1 does not prompt the connection of the removable medium 60 to be edited, but performs processing according to the editing when the removable medium 60 to be edited connects to the connector 50 as a trigger. To realize this characteristic, the command list CML illustrated in FIG. 5 is stored in the nonvolatile memory 30. When at least the removable medium 60 to be edited is not connected to the connector 50, edit commands to be performed when the removable medium 60 to be edited is connected to the connector 50 (for example edit commands CM1 to CM7, CM11 to CM14) are housed in the command list CML.

### (3) First example of a recording and reproduction device, a content processing method, and a content processing program:

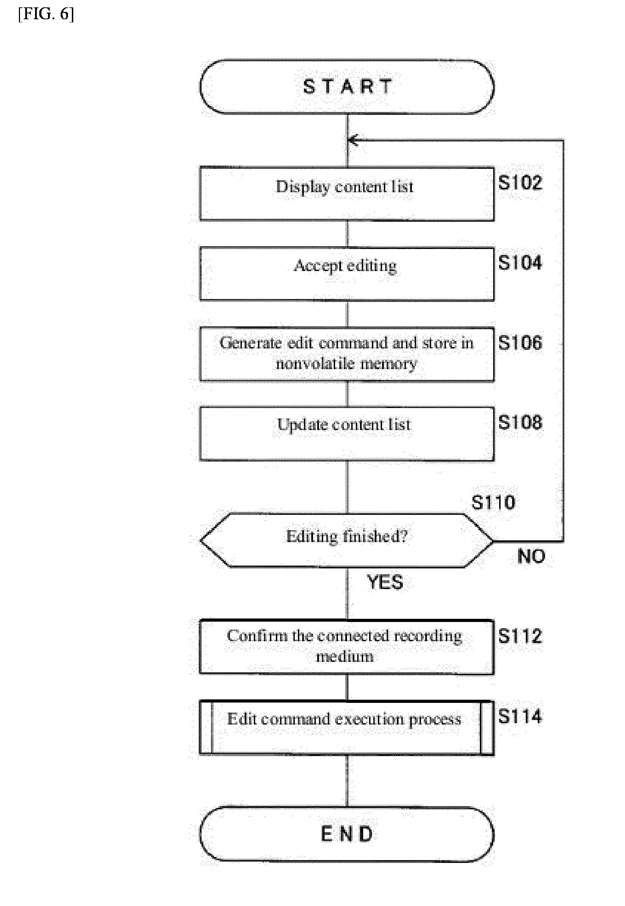

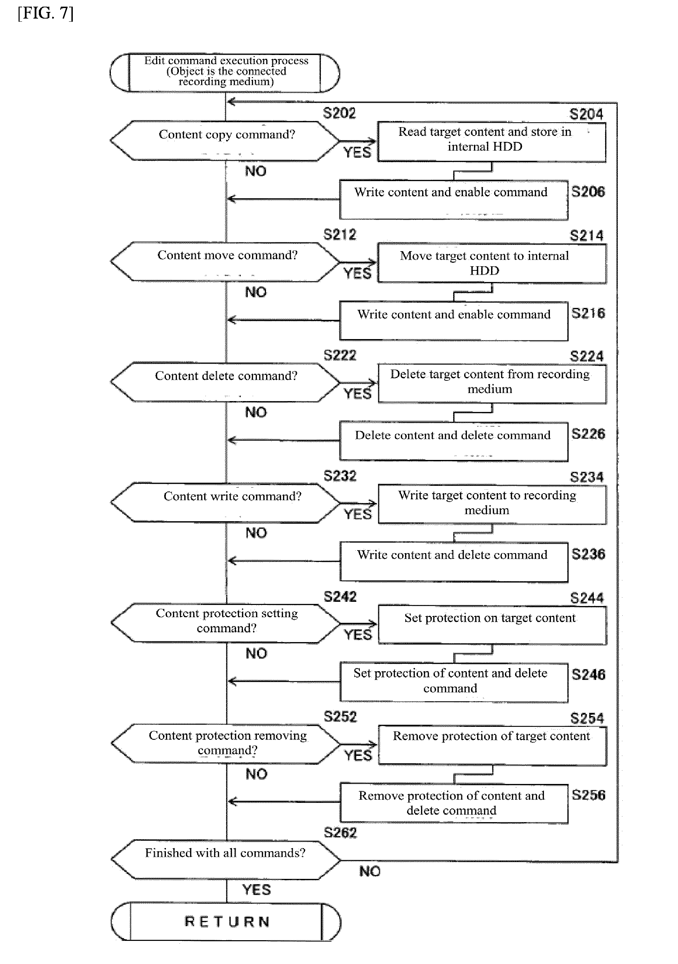

FIG. 6 shows an example of a content editing process. FIG. 7 shows an example of an edit command execution process performed in step S114 of FIG. 6. Below, "step" will be omitted. These processes are performed mainly with the main control unit 10.

The content editing process is performed by accepting an operation for displaying the content list L1 by, for example, the operation unit 14 and the keys 14a and 15a of the remote controller 15. One operation of a list display key provided on the keys 14a and 15a may be accepted. The processes shown in FIGS. 6 to 8 are performed in parallel with other processes through multi-tasking. The same is the case with all examples from the second example onward. S102 corresponds to the list display control means U1, and S104 to S108 correspond to the editing means U2.

When processing finishes, the main control unit 10 displays on the display device 80 the content list L1 illustrated in FIG. 4 according to the list information DA1 (Refer to FIG. 3) stored in the nonvolatile memory 30 with a removable medium 60 that has a connection to the connector 50 (S102). The content list L1 can be generated by, for example, extracting the title for each removable medium 60 from the list information DA1 illustrated in FIG. 3 and arranging in the vertical direction along with the recording medium name, thereby generating the content information column L2, then arranging the content information columns L2 in the horizontal direction. Editing items such as "copy", "move", "delete" and "protect" are provided on the display screen 81 illustrated in FIG. 4.

In S104, editing corresponding to the content list L1 is accepted. The main control unit 10 accepts an operation of moving a cursor CR1 provided on the display screen 81 vertically and horizontally by pushing the cursor key of the operation unit 14, the remote controller 15, or the like.

For example, if the cursor CR1 is set on "copy" and the enter key of the operation unit 14 or the remote controller 15 is operated, a message such as "Please select the program to copy" is displayed. If the cursor CR1 is set over the content to be copied in this display and the enter key is operated, a selection operation of the content to be copied is accepted. Next, a message such as "Please select the program to copy to" is displayed. If the cursor CR1 is set over the content to be copied to in this display and the enter key is operated, a selection operation of the content to be copied to is accepted.

If the cursor CR1 is set on "move" and the enter key is operated, a message such as "Please select the program to move" is displayed. If the cursor CR1 is set over the content to be moved in this display and the enter key is operated, a selection operation of the content to be moved is accepted. Next, a message such as "Please select the program to move to" is displayed. If the cursor CR1 is set over the content to be moved to in this display and the enter key is operated, a selection operation of the content to be moved to is accepted.

If the cursor CR1 is set on "delete" and the enter key is operated, a message such as "Please select the program to delete" is displayed. If the cursor CR1 is set over the content to be deleted in this display and the enter key is operated, a selection operation of the content to be deleted is accepted.

If the cursor CR1 is set on "protect" and the enter key is operated, a message such as "Please select the program to set/remove protection" is displayed. If the cursor CR1 is set over the content to be protected in this display and the enter key is operated, a selection operation of content to set the protection for content wherein protection is not set is accepted. Furthermore, with content having protection set ("Title 105" in the top side of FIG. 4) a content selection operation is accepted to remove the protection.

In S106, an edit command is generated based on the accepted operation and stored in the nonvolatile memory 30 as the command list CML. In S108, the content list L1 is updated in order according to the accepted editing. In S110, it is determined whether or not the editing of the content list L1 is finished. For example, when a finish key of the operation unit 14 or the remote controller 15 is operated, the main control unit 10 finishes the processes of S102 to S110. When an operation is performed on the content list L1, the main control unit 10 repeats the processes of S102 to S110.

A specific example of the process in S106 that generates an edit command is described below.
1. When copying the content to be copied (the removable medium 61) to the location to be copied to (removable medium 62), a copy command is housed in a location corresponding to the removable medium 61 to be copied from among the command list CML. The content ID of the content to be copied and the recording medium ID of the removable medium 62 to be copied to are associated and housed in the copy command.
2. When moving the content to be moved (the removable medium 61) to the location to be moved to (removable medium 62), a move command is housed in a location corresponding to the removable medium 61 to be moved from among the command list CML. The content ID of the content to be moved and the recording medium ID of the removable medium 62 to be moved to are associated and housed in the move command.
3. When deleting the content of a recording medium (the removable medium 61), a delete command is housed in a location corresponding to the removable medium 61 from among the command list CML. The content ID of the content to be deleted is associated and housed in the delete command.
4. When setting protection of the content of a recording medium (the removable medium 61), a protection setting command is housed in a location corresponding to the removable medium 61 from among the command list CML. The content ID of the content to set protection for is associated and housed in the protection setting command.
5. When removing protection of the content of a recording medium (the removable medium 61), a protection removing command is housed in a location corresponding to the removable medium 61 from among the command list CML. The content ID of the content to remove protection is associated and housed in the protection removing command.

For example, the operations below are performed in order on the content list L1 in the top side of FIG. 4.
1. An operation for copying the content "Title 101" of a medium 1 to a medium 2.
2. An operation for moving the content "Title 102" of the medium 1 to the medium 2.
3. An operation for deleting the content "Title 103" of the medium 1.
4. An operation for setting the protection of the content "Title 104" of the medium 1.
5. An operation for removing the protection of the protected content "Title 105" of the medium 1.
6. An operation for copying the content "Title 201" of the medium 2 to the medium 1.
7. An operation for moving the content "Title 202" of the medium 2 to the medium 3.

When the operation 1 described above is performed, the copy command CM1 is generated as illustrated in number 1 of "Medium 1" of FIG. 5, and the identification information "ID101" of the target content and the identification information "IDmedium2" of the recording medium to be copied are associated.

When the operation 2 described above is performed, the move command CM2 is generated as illustrated in number 2 of "Medium 1" of FIG. 5, and the identification information "ID102" of the target content and the identification information "IDmedium2" of the recording medium to be moved are associated.

When the operation 3 described above is performed, the delete command CM3 is generated as illustrated in number 3 of "Medium 1" of FIG. 5, and the identification information "ID103" of the target content is associated.

When the operation 4 described above is performed, the protection setting command CM4 is generated as illustrated in number 4 of "Medium 1" of FIG. 5, and the identification information "ID 104" of the target content is associated.

When the operation 5 described above is performed, the protection removing command CM5 is generated as illustrated in number 5 of "Medium 1" of FIG. 5, and the identification information "ID105" of the target content is associated.

When the operation 6 described above is performed, the copy command CM6 is generated as illustrated in the first of "Medium 2" of FIG. 5, and the identification information "ID201" of the target content and the identification information "IDmedium1" of the recording medium to be copied are associated.

When the operation 7 described above is performed, the move command CM7 is generated as illustrated in number 2 of "Medium 2" of FIG. 5, and the identification information "ID202" of the target content and the identification information "IDmedium3" of the recording medium to be moved are associated.

A specific example of the process in S108 that updates the content list L1 is described below.

The content list L1 before and after being updated when operations 1 through 7 described above have been performed is illustrated in FIG. 4. The content list L1 before updating (initial arrangement of the content list L1) is illustrated in the top side of FIG. 4, and the content list L1 after updating (changed arrangement of the content list L1) is illustrated in the bottom side of FIG. 4. When operation 1 described above has been performed, "Title 101" of "Medium 1" is added to the bottom of a title group "Medium 2". When operation 2 described above has been performed, "Title 102" of "Medium 1" is added to the bottom of a title group "Medium 2", "Title 102" of "Medium 1" is deleted, and the title group below "Title 102" is shifted upward one at a time. When operation 3 described above has been performed, "Title 103" of "Medium 1" is deleted, and the title group below "Title 103" is shifted upward one at a time. When operation 4 described above has been performed, "Title 104" of "Medium 1" is set with protection. When operation 5 described above has been performed, the protection of "Title 105" of "Medium 1" is removed. When operation 6 described above has been performed, "Title 201" of "Medium 2" is added to the bottom of the title group "Medium 1". When operation 7 described above has been performed, "Title 202" of "Medium 2" is added to the bottom of the title group "Medium 3", "Title 202" of "Medium 2" is deleted, and the title group below "Title 202" is shifted upward one at a time.

In S112, the identification information of the removable medium 60 is confirmed while connected to the connector 50. Afterwards, the main control unit 10 performs the edit command execution process illustrated in FIG. 7 (S114), and finishes the content editing process illustrated in FIG. 6.

When the edit command execution process illustrated in FIG. 7 is started, edit commands corresponding to the removable medium 60 connected are interpreted in order from among edit commands housed in the command list CML and a corresponding process is performed.

When the first edit command housed with the connected removable medium 60 as a target is a copy command (S202), the content to be copied is read from the removable medium 60 and stored in the internal HDD 40 (S204). Then the copy command is removed, and a write command for writing the content to be copied stored in the internal HDD 40 to the removable medium to be copied to is housed in the command list CML in a location corresponding to the removable medium to be copied to (S206).

When the first edit command housed with the connected removable medium 60 as a target is a move command (S212), the content to be moved is moved from the removable medium 60 to the internal HDD 40 (S214). Then the move command is removed, and a write command for writing the content to be moved stored in the internal HDD 40 to the removable medium to be moved to is housed in the command list CML in a location corresponding to the removable medium to be moved to (S216).

When the first edit command housed with the connected removable medium 60 as a target is a delete command (S222), the content to be deleted is deleted from the removable medium 60 (S224). The delete command is also deleted (S226).

When the first edit command housed with the connected removable medium 60 as a target is a write command (S232), the content to be written is moved from the internal HDD 40 to the removable medium 60 (S234). The write command is also deleted (S236).

When the first edit command housed with the connected removable medium 60 as a target is a protection setting command (S242), the content to have protection set in the removable medium 60 is set with protection. (S244). The protection setting command is also deleted (S246).

When the first edit command housed with the connected removable medium 60 as a target is a protection removing command (S252), the protection of the content to have protection removed in the removable medium 60 is removed. (S254). The protection removing command is also deleted (S256).

In S262, it is determined whether or not a corresponding process has been performed to all edit commands corresponding to the connected removable medium 60. If there is an unprocessed command, the main control unit 10 returns the process to S202. When corresponding processes have been performed on all edit commands, the main control unit 10 finishes the edit command execution process.

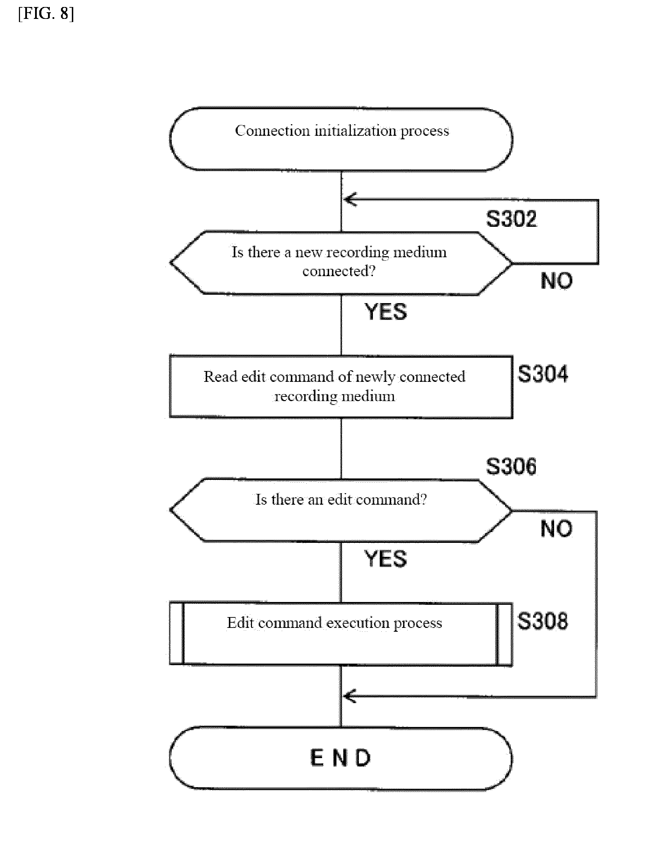

FIG. 8 illustrates an example of a connection initialization process that performs a process in accordance with editing the content list L1 when the removable medium 60 connects to the connector 50 as a trigger. This process is performed mainly with the main control unit 10, and is continuously performed as long as the power of the recording and reproduction device 1 is on. Note that the connection initialization process corresponds to the content processing means U3.

When the process is started, it is determined whether or not the newly removable medium 60 is connected to the connector 50 (S302). When a new connection of the removable medium is not detected, the process of S302 is repeated. When a new connection of the removable medium is detected, the main control unit 10 reads an edit command corresponding to the removable medium 60 that has been newly connected from the command list CML (S304). In S306, it is determined whether or not there is an edit command corresponding to the newly connected removable medium 60. When there is such an edit command, the main control unit 10 performs the edit command execution process illustrated in FIG. 7 (S308), and finishes the connection initialization process. When there is no such edit command, the main control unit 10 finishes the connection initialization process without performing the edit command execution process.

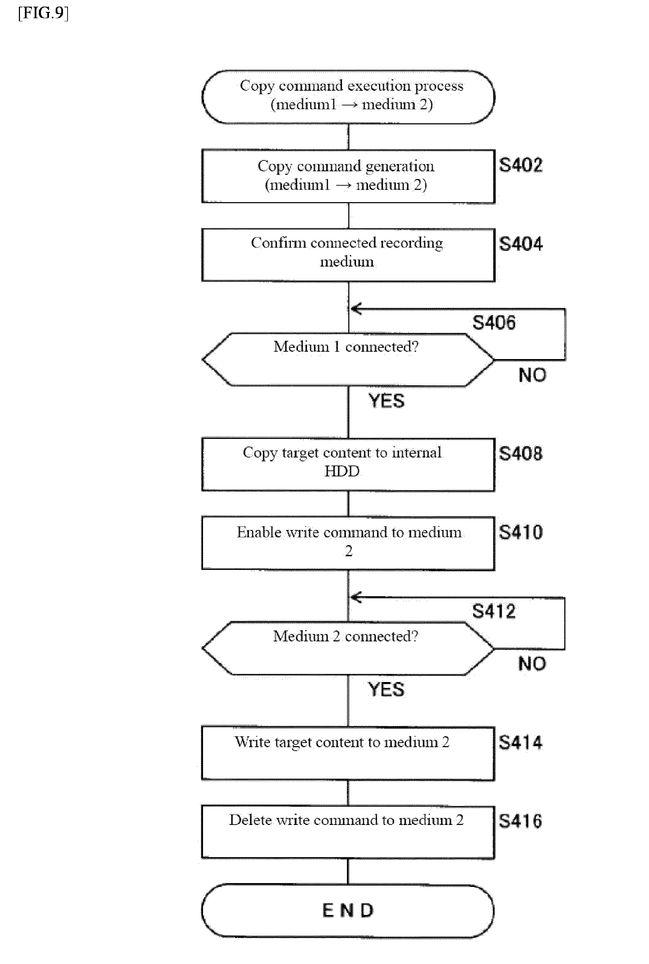

Next, a description will be given of which process will be performed for each edit command in accordance with FIGS. 9 to 13.

FIG. 9 illustrates an example of a copy command execution process that is performed when a copy command is generated. To describe more easily, the place to be copied from will be the removable 61 (medium name=medium 1), the place to be copied to will be the removable medium 62 (medium name=medium 2), and the operation 1 described above is performed for copying the content "Title 101" of the medium 1 to the medium 2 with the medium 1 not connected to the connector 50.

When the content editing process illustrated in FIG. 6 is performed and the copy command CM1 illustrated in FIG. 5 is generated (S402), the main control unit 10 confirms the identification information of the removable medium connected to the connector 50 (S404). When the medium 1 is newly connected to the connector 50 (S406), the main control unit 10 has this connection as a trigger and copies the content to be copied of "ID 101" stored in the medium 1 to the internal HDD 40 (S408). In S410, the copy command CM1 is removed, and a write command CM11 for writing the content to be copied stored in the internal HDD 40 to the medium 2 is housed in the command list CML in a location corresponding to the medium 2. By this, the write command CM11 is newly enabled as illustrated in the center of FIG. 5.

Afterwards, when the medium 2 is newly connected to the connector 50 (S412), the main control unit 10 has this connection as a trigger and writes the content to be written of "ID101" read from the internal HDD 40 to the medium 2 (S414). The content to be written of "ID101" may be deleted from the internal HDD 40. The main control unit 10 deletes the write command CM11 corresponding to the medium 2 from the command list CML (S416), and the copy command execution process is finished. By this, the write command CM11 is gone from the command list CML as illustrated in the lower portion of FIG. 5.

As described above, a process in accordance with the copy operation corresponding to the content list L1 is performed when the connection of the removable medium is a trigger. Therefore, the user does not have to perform an operation of connecting the removable medium directly after the copy operation. Therefore, it is easy to manage content between removable media.

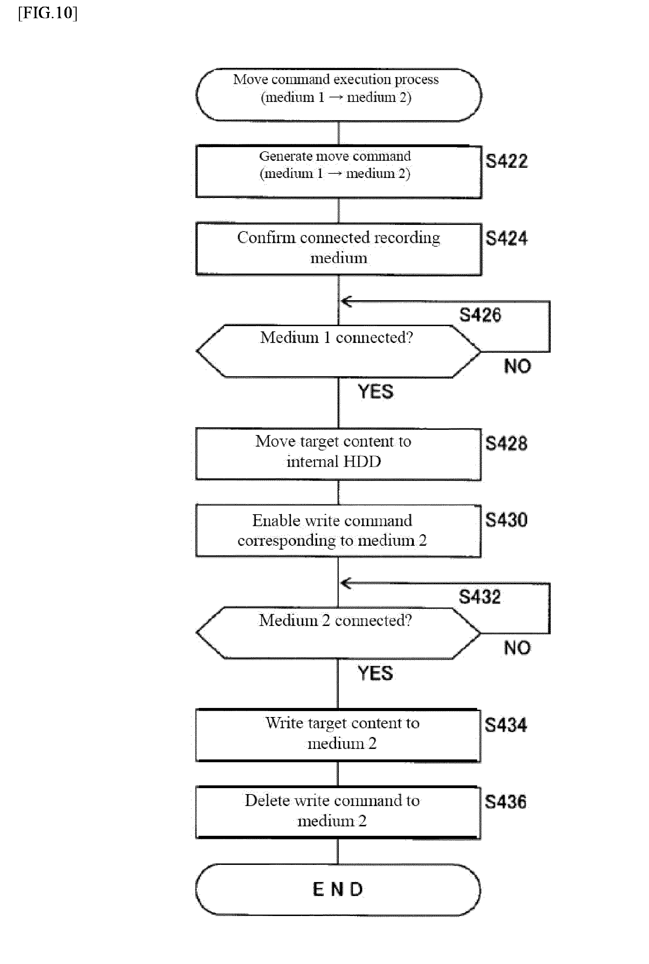

FIG. 10 illustrates an example of a move command execution process that is performed when a move command is generated. To describe more easily, the place to be moved from will be the removable 61 (medium name=medium 1), the place to be moved to will be the removable medium 62 (medium name=medium 2), and the operation 2 described above is performed for moving the content "Title 102" of the medium 1 to the medium 2 with the medium 1 not connected to the connector 50.

When the content editing process illustrated in FIG. 6 is performed and the move command CM2 illustrated in FIG. 5 is generated (S422), the main control unit 10 confirms the identification information of the removable medium connected to the connector 50 (S424). When the medium 1 is newly connected to the connector 50 (S426), the main control unit 10 has this connection as a trigger and moves the content to be moved of "ID 102" stored in the medium 1 to the internal HDD 40 (S428). In S430, the move command CM2 is removed, and a write command CM12 for writing the content to be moved stored in the internal HDD 40 to the medium 2 is housed in the command list CML in a location corresponding to the medium 2. By this, the write command CM12 is newly enabled as illustrated in the center of FIG. 5.

Afterwards, when the medium 2 is newly connected to the connector 50 (S432), the main control unit 10 has this connection as a trigger and writes the content to be written of "ID102" read from the internal HDD 40 to the medium 2 (S434). The content to be written of "ID102" may be deleted from the internal HDD 40. The main control unit 10 deletes the write command CM12 corresponding to the medium 2 from the command list CML (S436), and the move command execution process is finished. By this, the write command CM12 is gone from the command list CML as illustrated in the lower portion of FIG. 5.

As described above, a process in accordance with the move operation corresponding to the content list L1 is performed when the connection of the removable medium is a trigger. Therefore, the user does not have to perform an operation of connecting the removable medium directly after the move operation. Therefore, it is easy to manage content between removable media.

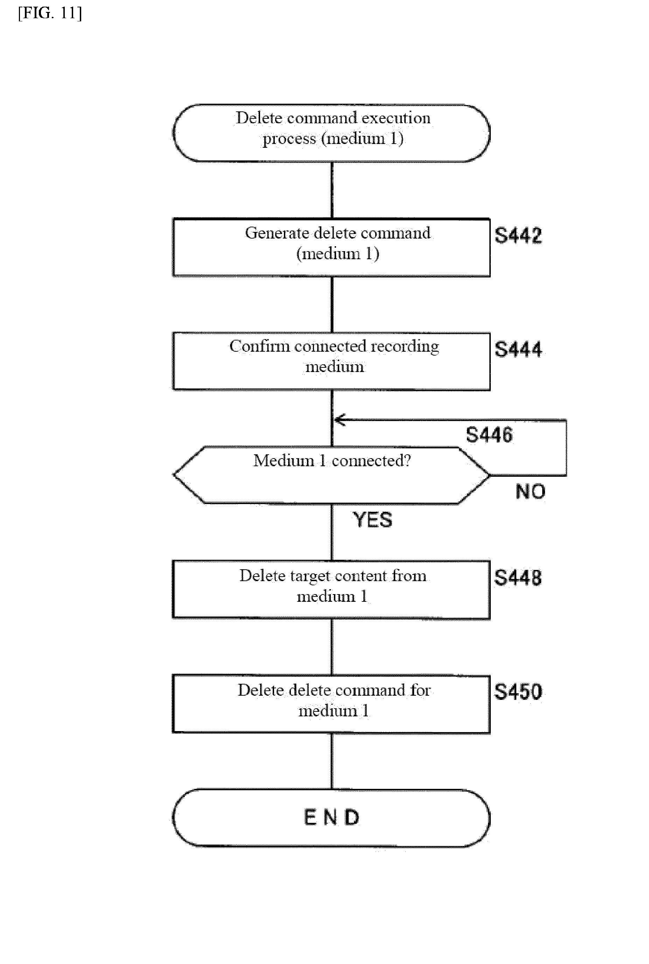

FIG. 11 illustrates an example of a delete command execution process that is performed when a delete command is generated. To describe more easily, the operation 3 described above is performed for deleting the content "Title 103" stored in the medium 1 with the removable medium 61 (medium name=medium 1) not connected to the connector 50.

When the content editing process illustrated in FIG. 6 is performed and the delete command CM3 illustrated in FIG. 5 is generated (S442), the main control unit 10 confirms the identification information of the removable medium connected to the connector 50 (S444). When the medium 1 is newly connected to the connector 50 (S446), the main control unit 10 has this connection as a trigger and deletes the content to be deleted of "ID103" stored in the medium 1 (S448). The main control unit 10 deletes the delete command CM3 corresponding to the medium 1 from the command list CML (S450), and the delete command execution process is finished. By this, the delete command CM3 is gone from the command list CML as illustrated in the center of FIG. 5.

As described above, a process in accordance with the delete operation corresponding to the content list L1 is performed when the connection of the removable medium is a trigger. Therefore, the user does not have to perform an operation of connecting the removable medium directly after the delete operation. Therefore, it is easy to manage content.

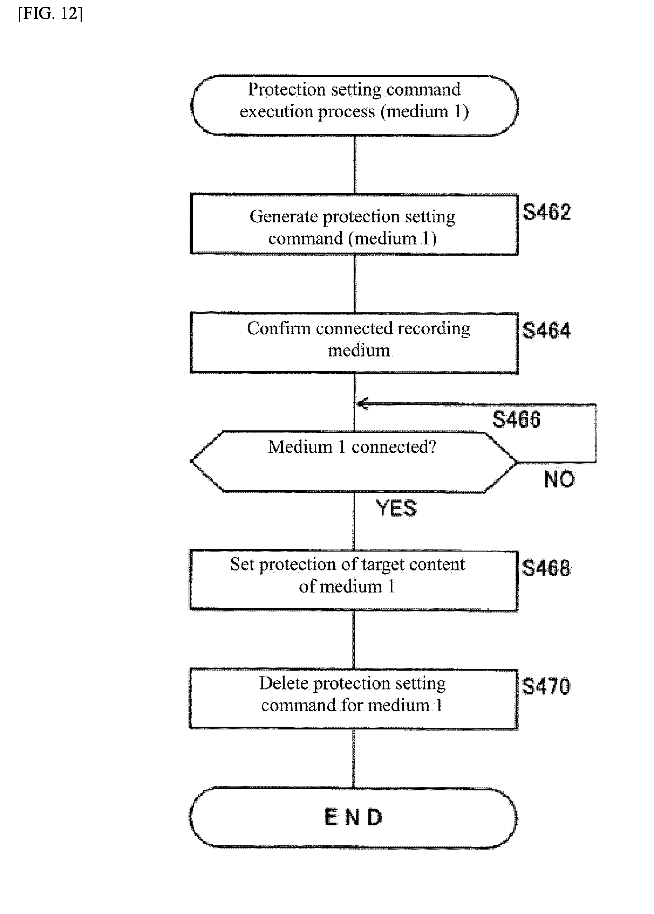

FIG. 12 illustrates an example of a protection setting command execution process that is performed when a protection setting command is generated. To describe more easily, the operation 4 described above is performed for setting the protection of the content "Title 104" stored in the medium 1 with the removable medium 61 (medium name=medium 1) not connected to the connector 50.

When the content editing process illustrated in FIG. 6 is performed and the protection setting command CM4 illustrated in FIG. 5 is generated (S462), the main control unit 10 confirms the identification information of the removable medium connected to the connector 50 (S464). When the medium 1 is newly connected to the connector 50 (S466), the main control unit 10 has this connection as a trigger and sets the protection of the content to have its protection set of "ID104" stored in the medium 1 (S468). The main control unit 10 deletes the protection setting command CM4 corresponding to the medium 1 from the command list CML (S470), and the protection setting command execution process is finished. By this, the protection setting command CM4 is gone from the command list CML as illustrated in the center of FIG. 5.

As described above, a process in accordance with the protection setting operation corresponding to the content list L1 is performed when the connection of the removable medium is a trigger. Therefore, the user does not have to perform an operation of connecting the removable medium directly after the protection setting operation. Therefore, it is easy to manage content.

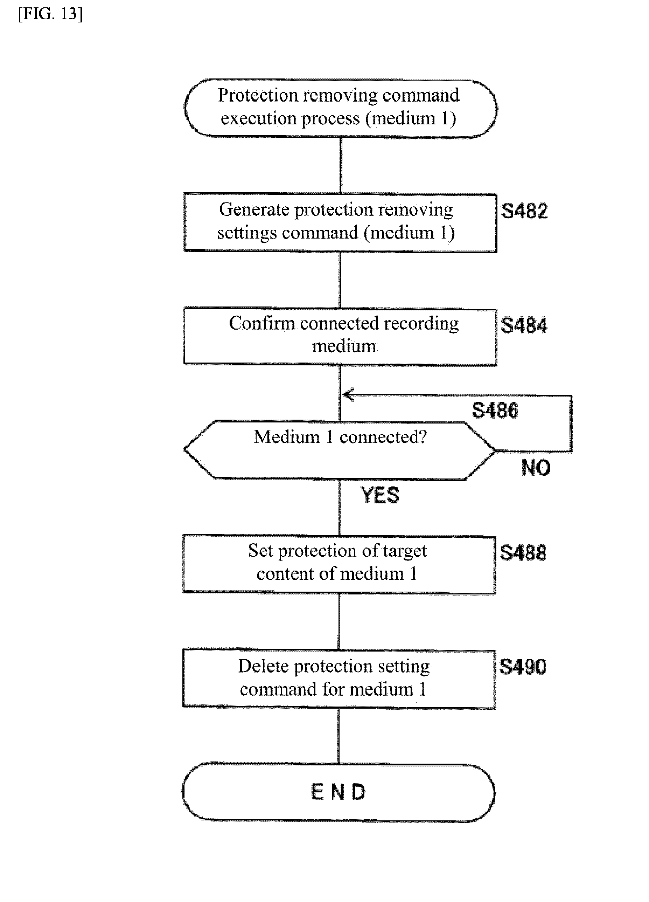

FIG. 13 illustrates an example of a protection removing command execution process that is performed when a protection removing command is generated. To describe more easily, the operation 5 described above is performed for removing the protection of the content "Title 105" stored in the medium 1 with the removable medium 61 (medium name=medium 1) not connected to the connector 50.

When the content editing process illustrated in FIG. 6 is performed and the protection removing command CM5 illustrated in FIG. 5 is generated (S482), the main control unit 10 confirms the identification information of the removable medium connected to the connector 50 (S484). When the medium 1 is newly connected to the connector 50 (S486), the main control unit 10 has this connection as a trigger and removes the protection of the content to have its protection removed of "ID105" stored in the medium 1 (S488). The main control unit 10 deletes the protection removing command CM5 corresponding to the medium 1 from the command list CML (S490), and the protection removing command execution process is finished. By this, the protection removing command CM5 is gone from the command list CML as illustrated in the center of FIG. 5.

As described above, a process in accordance with the protection removing operation corresponding to the content list L1 is performed when the connection of the removable medium is a trigger. Therefore, the user does not have to perform an operation of connecting the removable medium directly after the protection removing operation. Therefore, it is easy to manage content.

Note that when the above operations 1 through 7 are performed, how the content list L1 will change is illustrated in FIG. 4, and how the command list CML will change is illustrated in FIG. 5. For example, when operation 6 for copying the content "Title 201" of the medium 2 to the medium 1 is performed, the copy command CM6 is housed in the command list CML and the content of "ID201" is copied to the internal HDD 40 when the medium 2 being connected to the connector 50 is a trigger as illustrated in the top portion of FIG. 5. In this case, the write command CM 13 corresponding to the medium 1 is enabled as illustrated in the lower portion of FIG. 5. Furthermore, when operation 7 for moving the content "Title 202" of the medium 2 to the medium 3 is performed, the move command CM7 is housed in the command list CML and the content of "ID202" is moved to the internal HDD 40 when the media 2 being connected to the connector 50 is a trigger as illustrated in the top portion of FIG. 5. In this case, the write command CM 14 corresponding to the medium 3 is enabled as illustrated in the lower portion of FIG. 5.

With the specific example described above, a process in accordance with editing the content list L1 is performed when the removable medium 60 is connected to the connector 50 as a trigger. Therefore, the user does not have to perform an operation of connecting the removable medium 60 directly after performing editing on the content list L1. Therefore, it is easy to manage content between removable media.

### (4) Second example of a recording and reproduction device, a content processing method, and a content processing program:

FIG. 14 illustrates an example of an edit command execution process in a second example. In the second example, as illustrated with a dashed line in FIG. 1, the probability that the removable media to be copied from and to be copied to, and the removable media to be moved from and to be moved to are each connected to the connector 50 is considered. For example, the removable media 61 and 62 are connected to the connector 50. The recording and reproduction device 1 copies the content CT1 to be copied recorded in the removable medium (first recording medium) 61 directly to the removable medium (second recording medium) 62, and moves the content CT1 to be moved recorded in the removable medium 61 directly to the removable medium 62. The process illustrated in FIG. 14 adds S502 to S506 and S512 to S516 to the process illustrated in FIG. 7. Note that the main control unit 10 according to the second example can execute the processes illustrated in FIGS. 6 and 8 to 13.

When the edit command execution process illustrated in FIG. 14 is started, the main unit 10 determines whether or not the removable medium 62 to be copied to is connected (S502) when the first edit command housed with the connected removable medium 61 as a target is a copy command (S202). When the removable medium 62 to be copied to is not connected, the main control unit 10 reads and stores the content to be copied from the removable medium 60 in the internal HDD 40, deletes the copy command, and houses the writing command for writing the content to be copied to the removable medium 62 to be copied to in the command list CML (S204 to S206).

When the removable medium 62 to be copied to is connected, the main control unit 10 copies the content to be copied recorded in the removable medium 61 to be copied from directly to the removable medium 62 to be copied to (S504). At this time, the content to be copied is not read in the internal HDD 40. Furthermore, the main control unit 10 deletes the copy command corresponding to the removable medium 61 to be copied from, from the command list CML (S506), and continues the process to S212.

When the first edit command housed with the connected removable medium 61 as a target is a move command (S212), the main unit 10 determines whether or not the removable medium 62 to be moved to is connected (S512). When the removable medium 62 to be moved to is not connected, the main control unit 10 moves the content to be moved from the removable medium 61 to the internal HDD 40, deletes the move command, and houses the writing command for writing the content to be moved stored in the internal HDD 40 to the removable medium 62 to be moved to in the command list CML (S214 to S216).

When the removable medium 62 to be moved to is connected, the main control unit 10 moves the content to be moved recorded in the removable medium 61 to be moved from directly to the removable medium 62 to be moved to (S514). At this time, the content to be moved is not read in the internal HDD 40. Furthermore, the main control unit 10 deletes the move command corresponding to the removable medium 61 to be moved from, from the command list CML (S516).

Afterwards, the processes of S222 to S262 illustrated in FIG. 7 are performed. In S262, the main control unit 10 determines whether or not a corresponding process has been performed to all edit commands corresponding to the connected removable medium 61. If there is an unprocessed command, the main control unit 10 returns the process to S202. When corresponding processes have been performed on all edit commands, the main control unit 10 finishes the edit command execution process.

In this specific example, the content CT1 is directly copied when the removable media 61 and 62 to be copied from and to be copied to are connected to the connector 50, and the content CT1 is directly moved when the removable media 61 and 62 to be moved from and to be moved to are connected to connector 50. When this is the case, the recording and reproduction device 1 can have favorable usability because there is no need to use the internal HDD 40.

### (5) Third example of a recording and reproduction device, a content processing method, and a content processing program:

FIG. 15 illustrates an example of an edit accepting process in the third example. This process is performed in place of S104 to S106 illustrated in FIG. 6. In the third example, content CT1 is written after reducing the information amount when the remaining recording capacity of the recording medium to be copied to or to be moved to is small. For example, it is proposed to lessen the bitrate (information amount) of the target content CT1 when the removable medium 62 to be copied to or to be moved to (second recording medium) is connected to the connector 50. Note that the main control unit 10 according to the third example can execute the processes illustrated in FIGS. 7 to 13.

When the edit accepting process illustrated in FIG. 15 is started, the main control unit 10 accepts editing corresponding to the content list L1 (S602). In S604, it is determined whether or not the accepted editing is a copy or a move. If the accepted editing is neither a copy or a move, the main control unit 10 generates an edit command based on the accepted operation, stores the edit command in the nonvolatile memory 30 as the command list CML (S616), and finishes the edit accepting process.

If the accepted editing is a copy or a move, the main control unit 10 determines whether or not the remaining recording capacity of the removable medium 62 to be written to is less than the capacity of the target content stored in the removable medium 61 to be copied or moved from (S606). As illustrated in FIG. 2, a remaining recording capacity "rrrGB" is held in each of the removable media 60, and the remaining recording capacity "rrrGB" of each of the removable media 60 is included in the list information DA1 stored in the nonvolatile memory 30 as illustrated in FIG. 3. Then, the remaining recording capacity of the removable medium 62 to be written to is read from the nonvolatile memory 30 and compared with the capacity of the target content recorded in the removable medium 61. If the remaining recording capacity of the removable medium 62 to be written to is equal or greater than the capacity of the target content, the main unit 10 finishes the edit accepting process because there is no need to reduce the information amount of the target content.

If the remaining recording capacity of the removable medium 62 to be written to is less than the capacity of the target content, the main unit 10 accepts editing for reducing the information amount of the target content (S608). With this process, for example, the capacity of the target content is displayed on the display device 80 by selecting a bitrate 1 or above that is less than or equal to the remaining recording capacity of the removable medium 62, and a bit rate or edit cancel can be made into an accepting process by the operation of the keys 14a and 15a of the operation unit 14 or the remote controller 15. In S610, it is determined whether or not the bitrate of the target content will be reduced. When one of the bitrates has been selected, the main control unit 10 generates a copy command or a move command with information that reduces the bitrate, stores the command in the nonvolatile memory 30 as the command list CML (S612), and finishes the edit accepting process. When edit cancel has been selected, the main control unit 10 cancels the edit accepted in S602 (S614) and finishes the edit accepting process.

Afterwards, when the processes illustrated in FIGS. 7 to 10 are performed, the bitrate of the content to be written is reduced below the remaining recording capacity of the removable medium 62 and the content to be written is written to the removable medium 62. If the edit command is a copy command, the bitrate of the content to be copied is reduced in S204 or S234 of FIG. 7 to the bitrate accepted in S608. If the edit command is a move command, the bitrate of the content to be moved is reduced in S214 or S234 of FIG. 7 to the bitrate accepted in S608. By this, the target content with a reduced bitrate is written to the removable medium 62 in S234 of FIG. 7.

With this specific example, it is easier to write content between removable media because the information amount is reduced and written to the removable media 60 even if the remaining capacity of the removable media 60 doing the writing is small.

### (6) Other modified examples:

The order of each step of the processes described above may be changed as appropriate. For example, with the processes in FIG. 6, the content list updating process of S108 may be performed before the edit command generating process in S106.

With the above processes, even if a portion of copying content, moving content, deleting content, setting protection of content, and removing protection of content is not performed, it is included in one or more embodiments of the present technique.

### (7) Conclusion:

As described above, according to various aspects of the present invention, a technique can be provided that can ease the managing of content of a recording medium. Of course, the basic functions and effects described above can also be achieved by a technique and the like composed only of configuration requirements according to the individual claims.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

For example, all the below can be implemented.
- Substituting components, configurations, and the like disclosed in the embodiments that can be mutually replaced.
- Substituting a member, configuration, and the like not disclosed in the embodiments but is a known technique mutually replaceable by a member, configuration, and the like disclosed in the embodiments.
- Substituting a member, configuration, and the like not disclosed in the embodiments but can be conceivably achieved as a replacement for a member, configuration, and the like disclosed in the embodiments by a person skilled in the art based on a known technique or the like. These replaced aspects are also included in one or more embodiments of the present invention.

### [REFERENCE NUMERALS]

1... Recording and reproduction device, 10... Main control unit (or "controller")
14... Operation portion (or "operator"), 14a... Key, 15... Remote controller, 15a... Key
30... Nonvolatile memory (list information storage means)
40... Internal hard disk drive (storage unit)
50... Connector (recording medium connection portion)
60, 61, 62... Removable medium (recording medium)
80...Display device (display portion), 81...Screen
CML... Command list, CT1... Content, CR1... Cursor
DA1.. List information, DA2... Additional information
L1... Content list, L2... Content information column
P1... Content processing program,
U1... List display control means, U2... Editing means, U3... Content processing means.

## Claims

1. A recording and reproduction device (1) comprising:
a connector (50);
a storage unit (40) that stores list information of a content stored in a first recording medium (60, 61, 62); and
a controller (10) that associates the first recording medium (60, 61, 62) with an instruction to perform processing on the content based on the list information, and that stores the instruction in the storage unit (40), wherein
the controller comprises a processor (11) that performs the processing based on the first recording medium (60, 61, 62) connected to the connector (50).

2. The recording and reproduction device according to claim 1, wherein
the instruction is a command to write a target content recorded in the first recording medium to a second recording medium,
the processor stores the target content in the storage unit if the first recording medium is connected to the connector, and
the processor writes the target content stored in the storage unit to the second recording medium if the second recording medium is connected to the connector.

3. The recording and reproduction device according to claim 1 or 2, wherein
the instruction is a command to write a target content recorded in the first recording medium to a second recording medium, and
the processor copies the target content recorded in the first recording medium directly to the second recording medium if the first recording medium and the second recording medium are connected to the connector.

4. The recording and reproduction device according to any of claims 1 to 3, wherein
the instruction is a command to move a target content recorded in the first recording medium to a second recording medium, and
the processor moves the target content stored in the first recording medium to the storage unit if the first recording medium is connected to the connector, and moves the target content stored in the storage unit to the second recording medium if the second recording medium is connected to the connector.

5. The recording and reproduction device according to any of claims 1 to 4, wherein
the instruction is a command to move a target content recorded in the first recording medium to a second recording medium, and
the processor moves the target content recorded in the first recording medium directly to the second recording medium if the first recording medium and the second recording medium are connected to the connector.

6. The recording and reproduction device according to any of claims 1 to 5, wherein
the instruction is a command to perform at least one of deletion, setting of protection, and removal of protection for the content recorded in the first recording medium.

7. The recording and reproduction device according to any of claims 1 to 6, wherein
the storage unit stores remaining recording capacity of a second recording medium connected to the connector,
the instruction is a command to write a target content stored in the first recording medium to the second recording medium,
the controller generates and stores in the storage unit an instruction to reduce information amount of the target content to less than remaining recording capacity of the second recording medium if the information amount of the target content exceeds the remaining recording capacity of the second recording medium, and
the processor performs a process that reduces the information amount of the target content to less than the remaining recording capacity of the second recording medium based on the instruction to reduce the information amount of the target content

8. A content processing method comprising:
storing list information (DA1) of a content stored in a first recording medium (60, 61, 62);
associating the first recording medium (60, 61, 62) with an instruction to perform processing on the content based on the list information (DA1); and
performing the processing based on the instruction if the first recording medium (60, 61, 62) is connected to a connector (50).

9. The content processing method according to claim 8, wherein
the instruction is a command to write a target content recorded in the first recording medium to a second recording medium, and
the processing comprises:
storing the target content in the storage unit if the first recording medium is connected to the connector; and
writing the target content stored in the storage unit to the second recording medium if the second recording medium is connected to the connector.

10. The content processing method according to claim 8 or 9, wherein
the instruction is a command to write a target content recorded in the first recording medium to a second recording medium, and
the processing comprises copying the target content recorded in the first recording medium directly to the second recording medium if the first recording medium and the second recording medium are connected to the connector.

11. The content processing method according to any of claims 8 to 10, wherein
the instruction is a command to move a target content recorded in the first recording medium to a second recording medium, and
the processing comprises moving the target content stored in the first recording medium to the storage unit if the first recording medium is connected to the connector, and moving the target content stored in the storage unit to the second recording medium if the second recording medium is connected to the connector.

12. The content processing method according to any of claims 8 to 11, wherein
the instruction is a command to move a target content recorded in the first recording medium to a second recording medium, and
the processing comprises moving the target content recorded in the first recording medium directly to the second recording medium if the first recording medium and the second recording medium are connected to the connector.

13. The content processing method according to any of claims 8 to 12, further comprising:
storing in a storage unit remaining recording capacity of a second recording medium connected to the connector, wherein the instruction is a command to write a target content stored in the first recording medium to the second recording medium;
generating and storing in the storage unit an instruction to reduce information amount of the target content to less than remaining recording capacity of the second recording medium if the information amount of the target content exceeds the remaining recording capacity of the second recording medium; and
performing a process that reduces the information amount of the target content to less than the remaining recording capacity of the second recording medium based on the instruction to reduce the information amount of the target content.

14. A display device (80) that arranges and displays a content list (L1) for each of a plurality of recording media (60, 61, 62), wherein
a first content list of a first recording medium displays a first title,
a second content list of a second recording medium displays a second title, and the display device (80) accepts processing that includes at least one of moving and copying a content between the first recording medium and the second recording medium based on a change in an arrangement of the first title and the second title.

15. The display device according to claim 14, wherein
the processing further includes at least one of deletion, protection, and protection removal of the content.
